# EUROPEAN PATENT SPECIFICATION

(11) **EP 3 053 442 B1**
(45) Date of publication and mention of the grant of the patent: **13.06.2018**
(21) Application number: 15153899.8
(22) Date of filing: 05.02.2015
(51) Int. Cl.: A21C 9/08

(54) **Device for flipping over U-shaped bent dough products, in particular croissants**
Vorrichtung zum Umdrehen von U-förmig gebogenen Teigprodukten, insbesondere von Hörnchen
Dispositif permettant de retourner des produits en pâte courbés en forme de U, en particulier des croissants

(43) Date of publication of application: 10.08.2016
(73) Proprietor: Radie B.V., 4104 BC Culemborg (NL)
(72) Inventor: Van Blokland, Johannes, Josephus, Antonius, 1251 BG Laren (NL)
(74) Representative: Patentwerk B.V.

(56) References cited:
- EP-A1- 0 647 404
- AT-B- 326 065
- DE-A1- 2 603 168
- US-A- 4 036 569

## Description

The present invention relates to a device for flipping over U-shaped bent dough products, in particular croissants.

Devices for flipping over dough products in general, and croissants in particular, are well known in the art. Examples can for instance be found in the patent applications WO2012062267, DE202008003923 and EP1747724.

The devices disclosed in these publications are intended for flipping over rolled up dough products and may serve to bring the rolled up dough pieces in a desired position.

However, it may be desired to have the dough products, in particular croissants, not only rolled up, but bent as well, in order to create a U, C or half-moon shaped dough product. In the following, these shapes will be referred to as U-shape. Although the invention relates to such U-shape, the device according to the invention may also be used for treating L-shaped products, that is, half of a U-shape. When handling these dough products, especially before the baking process, when they are still flexible and their form is not fixed yet, it may be necessary to change their orientation, in particular the orientation of their legs.

The devices disclosed in the above mentioned publications however, do not provide the opportunity to flip over U-shaped dough products, since the dough products are clamped over their entire length. A bent dough product will be stretched or otherwise deformed when processed by the devices according to the state of the art.

Patent AT326065 discloses in an embodiment of device for bending elongated dough products, wherein dough products after being bend are transferred from one conveyor onto another conveyor, thereby enabling the dough products to change their orientation. It is therefore a goal of the present invention to provide a device for flipping over dough products, that enables flipping over U-shaped dough products.

The invention thereto provides a device for flipping over U-shaped bent dough products, in particular croissants, having two legs connected by a centre portion, comprising a conveyor, for conveying the dough products in a direction of conveyance, wherein the legs of the U shape either precede or follow their centre portion, a flipping over unit, arranged above the conveyor, comprising a dough product engaging surface, for engaging the centre portion, a drive, for moving the dough product engaging surface in the direction of conveyance; a controller, for controlling the speed of the movement of the dough product engaging surface with respect to the speed of the conveyor wherein the dough product flipping over unit comprises free space for the legs of the dough products, on both sides of the flipping over unit in a direction perpendicular to the direction of conveyance, for enabling the legs of the dough product, to make a turn when the croissant is flipped.

As a result of the free space, the legs of a U-shaped dough product can flip over without interference with the device and without undesired deformations. The dough product engaging surface, is configured for engaging the centre portion, that is, without touching the legs of the dough product, so that these can move without limitation or interaction with parts of the device, which enables flipping over the dough product without damage. Preferably, the dough product engaging surface in a width direction perpendicular to the direction of conveyance is smaller than 2 centimetres, and more preferably smaller than one centimetre, and in particular smaller than half a centimetre. This way, the chance that the legs of the dough product will touch the product during handling is further minimised. The dough product engaging surface then only interacts with the centre portion of the dough product, which is in case of a bent croissant for example made from a triangular or trapezoid dough piece, also the highest point of the dough products when it is laying on the conveyor.

A string has proven to be suitable as a the dough product engaging surface, for engaging the centre portion. Such string may be small enough and can easily be tensioned to exercise an optimal pressure to the dough product for flipping it over. This may for instance be an endless string, stretched over at least two pulleys. This construction facilitates easily controlling the speed of the movement of the dough product flipping over unit with respect to the speed of the conveyor.

In a practical embodiment, the free space has a height of at least 8 cm, and preferably, at least 10 cm. This allows the legs of a common bent croissant to flip without problems. The controller may be configured for setting the speed of the dough product engaging surface higher in the direction than the speed of the conveyor, when the dough product is to be flipped from a position wherein its legs follow its centre portion to a position wherein its legs precede its centre portion, and for setting the speed of the dough product engaging surface lower or reverse in the direction than the speed of the conveyor, when the dough product is to be flipped from a position wherein its legs precede its centre portion to a position wherein its legs follow its centre portion.

The above described embodiments can comprise a single flipping over unit, but in numerous situations, dough products will be arranged in multiple lanes on the conveyor, and thereto, the device according to the invention may comprise multiple flipping over units, arranged above the conveyor, spaced in a direction perpendicular to the direction of movement. In a practical embodiment, they may be positioned exactly next to each other, for instance in order to be driven by the same shaft, but an offset is also well possible.

When operating the device according to the invention, the speed of the movement of the dough product engaging surface with respect to the speed of the conveyor may be controlled such that, with a given length over which the dough product engaging surface engages the product, and a given radius of the product, said product is turned half a turn, or at least more than a quarter of a turn, wherein the rest of the flipping is performed thanks to gravity.

The invention will now be elucidated into more detail with reference to the following figures. Herein:
- Figure 1 shows a perspective view of a device according to the present invention;
- Figure 2 shows a front view of a device according to the present invention;
- Figure 3 shows a detail of the device according to the present invention.

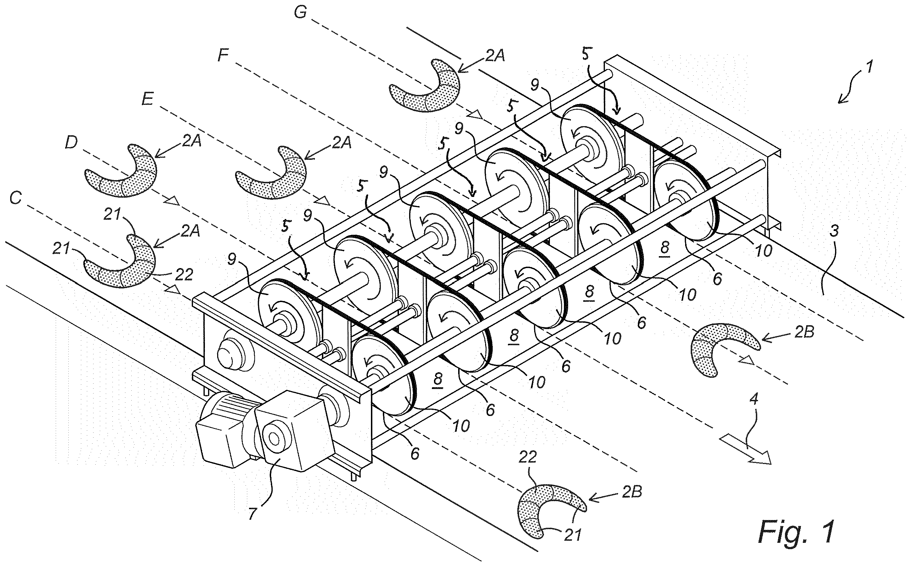

Figure 1 shows a device 1 for flipping over U-shaped bent dough products 2 (A, B), in particular croissants, having two legs 21 connected by a centre portion 22, comprising a conveyor 3 , for conveying the dough products in a direction of conveyance 4, wherein the legs of the U shape initially follow (2A) their centre portion, a set of multiple flipping over units 5, arranged above the conveyor 3, comprising a dough product engaging surface 6, for engaging the centre portion 22; a drive 7, for moving the dough product engaging unit in the direction of conveyance; a controller, for controlling the speed of the movement of the dough product engaging unit with respect to the speed of the conveyor, wherein the dough product flipping over unit comprises free space 8 for the legs of the dough product, on both sides of the flipping over unit 5 in a direction perpendicular to the direction of conveyance 4, for enabling the legs 21 of the dough product, to make a turn when the croissant 2 is flipped.

The dough product engaging surface comprises a plurality of strings 6, for engaging the centre portions 22, which strings have a size (width) smaller than 2 centimetres, preferably smaller than one centimetre, and in particular smaller than half a centimetre. The strings 6 are each stretched over at least two pulleys 9, 10, having a radius of at least 8 cm, and preferably, at least 10 cm.

The controller is in the depicted example configured for setting the speed of the dough product engaging surface higher in the direction than the speed of the conveyor, when the dough product is to be flipped from a position wherein its legs follow its centre portion (2A) to a position wherein its legs precede its centre portion (2B).

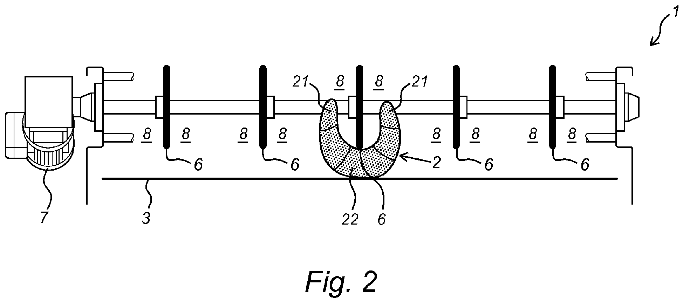

Figure 2 shows a front view of the device 1 from figure 1, comprising a set of multiple flipping over units 5, arranged above the conveyor, spaced in a direction perpendicular to the direction of movement, for flipping over dough products 2 arranged in multiple lanes C, D, E, F, G on the conveyor.

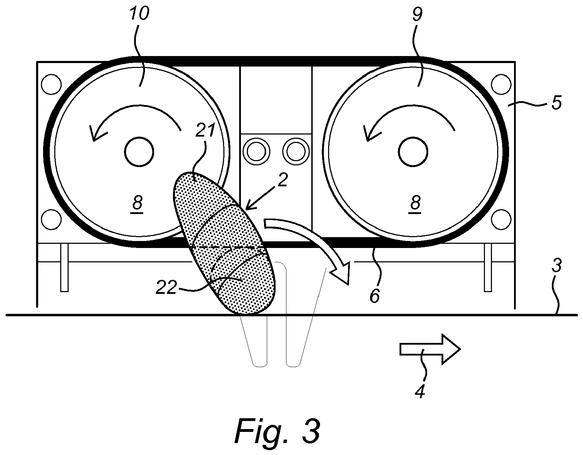

Figure 3 shows a detailed side view of the set of flipping over units 5. Visible is how the croissant 2 is flipped over and how its legs 21 can freely move in the spaces 8.

## Claims

1. Device (1) for flipping over U-shaped bent dough products (2), in particular croissants having two legs (21) connected by a centre portion (22), the device comprising:
- a conveyor (3), for conveying the dough products in a direction of conveyance (4), wherein the legs of the U shape either precede (2B) or follow (2A) their centre portion;
- a flipping over unit (5), arranged above the conveyor (3), comprising:
∘ a dough product engaging surface (6), for engaging the centre portion (22);
∘ a drive (7), for moving the dough product engaging surface (6) in the direction of conveyance (4);
∘ a controller, for controlling the speed of the movement of the dough product engaging surface (6) with respect to the speed of the conveyor (3);
the flipping over unit (5) comprises free space (8) for the legs (21) of the dough product (2), on both sides of the flipping over unit (5) in a direction perpendicular to the direction of conveyance (4), for enabling the legs (21) of the dough product (2), to make a turn when the dough product (2) is flipped,
**characterised in that**
the dough product engaging surface (6) is configured for engaging the centre portion (22) without touching the legs (21) of the dough product (2).

2. Device (1) according to claim 1, wherein the dough product engaging surface (6) in a width direction perpendicular to the direction of conveyance (4) is smaller than 2 centimetres, preferably smaller than one centimetre, and in particular smaller than about half a centimetre.

3. Device (1) according to claim 2, wherein the dough product engaging surface (6), comprises a string, for engaging the centre portion (22).

4. Device (1) according to claim 2, wherein the dough product engaging surface (6), comprises a plurality of strings, for engaging the centre portion (22).

5. Device (1) according to claims 3 or 4, wherein at least one string is an endless string, stretched over at least two pulleys (10).

6. Device (1) according to claim 5, wherein the free space (8) has a height of at least 8 cm, and preferably, at least 10 cm.

7. Device (1) according to any of the preceding claims, wherein the controller is configured for setting the speed of the dough product engaging surface (6) higher in the direction than the speed of the conveyor (3), when the dough product (2) is to be flipped from a position wherein its legs (21) follow its centre portion (22) to a position wherein its legs (21) precede its centre portion (22), and for setting the speed of the dough product engaging surface (6) lower or reverse in the direction than the speed of the conveyor (3), when the dough product (2) is to be flipped from a position wherein its legs (21) precede its centre portion (22) to a position wherein its legs (21) follow its centre portion (22).

8. Device (1) according to any of the preceding claims, comprising multiple flipping over units (5), arranged above the conveyor (3), spaced in a direction perpendicular to the direction of movement (4), for flipping over dough products (2) arranged in multiple lanes (C, D, E, F, G) on the conveyor (3).

9. Device (1) according to any of the preceding claims, wherein the controller is configured for setting the speed of the movement of the dough product engaging surface (6) with respect to the speed of the conveyor (3) such that, with a given length over which the dough product engaging surface (6) engages the product (2), and a given radius of the product (2), said product is turned half a turn, or at least more than a quarter of a turn.

## Patentansprüche

1. Vorrichtung (1) zum Umdrehen U-förmig gebogener Teigprodukte (2), insbesondere Hörnchen mit zwei Schenkeln (21), die durch einen Mittelabschnitt (22) verbunden sind, wobei die Vorrichtung umfasst:
- einen Förderer (3) zum Fördern der Teigprodukte in einer Förderrichtung (4), wobei die Schenkel der U-Form entweder ihrem Mittelabschnitt vorangehen (2B) oder folgen (2A);
- eine Umdreheinheit (5), die über dem Förderer (3) angeordnet ist, umfassend:
∘ eine Teigprodukterfassungsfläche (6) zum Erfassen des Mittelabschnitts (22);
∘ einen Antrieb (7) zum Bewegen der Teigprodukterfassungsfläche (6) in der Förderrichtung (4);
∘ eine Steuerung zum Steuern der Bewegungsgeschwindigkeit der Teigprodukterfassungsfläche (6) in Bezug auf die Geschwindigkeit des Förderers (3);
wobei die Umdreheinheit (5) freien Raum (8) für die Schenkel (21) des Teigprodukts (2) an beiden Seiten der Umdreheinheit (5) in einer Richtung senkrecht zur Förderrichtung (4) umfasst, sodass die Schenkel (21) des Teigprodukts (2) gedreht werden können, wenn das Teigprodukt (2) umgedreht wird,
**dadurch gekennzeichnet, dass**
die Teigprodukterfassungsfläche (6) konfiguriert ist, den Mittelabschnitt (22) zu erfassen, ohne die Schenkel (21) des Teigprodukts (2) zu berühren.

2. Vorrichtung (1) nach Anspruch 1, wobei die Teigprodukterfassungsfläche (6) in einer Breitenrichtung senkrecht zur Förderrichtung (4) kleiner als 2 Zentimeter, vorzugsweise kleiner als ein Zentimeter und insbesondere kleiner als etwa ein halber Zentimeter ist.

3. Vorrichtung (1) nach Anspruch 2, wobei die Teigprodukterfassungsfläche (6) eine Schnur zum Erfassen des Mittelabschnitts (22) umfasst.

4. Vorrichtung (1) nach Anspruch 2, wobei die Teigprodukterfassungsfläche (6) mehrere Schnüre zum Erfassen des Mittelabschnitts (22) umfasst.

5. Vorrichtung (1) nach Ansprüchen 3 oder 4, wobei mindestens eine Schnur eine Endlosschnur ist, die über zumindest zwei Riemenscheiben (10) gespannt ist.

6. Vorrichtung (1) nach Anspruch 5, wobei der freie Raum (8) eine Höhe von zumindest 8 cm und vorzugsweise zumindest 10 cm aufweist.

7. Vorrichtung (1) nach einem der vorangehenden Ansprüche, wobei die Steuerung konfiguriert ist, die Geschwindigkeit der Teigprodukterfassungsfläche (6) höher als die Geschwindigkeit des Förderers (3) in der Richtung einzustellen, wenn das Teigprodukt (2) aus einer Position, in der seine Schenkel (21) seinem Mittelabschnitt (22) folgen, in eine Position umgedreht wird, in der seine Schenkel (21) seinem Mittelabschnitt (22) vorangehen, und die Geschwindigkeit der Teigprodukterfassungsfläche (6) niedriger als die Geschwindigkeit des Förderers (3) oder in der Richtung umgekehrt einzustellen, wenn das Teigprodukt (2) aus einer Position, in der seine Schenkel (21) seinem Mittelabschnitt (22) vorangehen, in eine Position umgedreht wird, in der seine Schenkel (21) seinem Mittelabschnitt (22) folgen.

8. Vorrichtung (1) nach einem der vorangehenden Ansprüche, umfassend mehrere Umdreheinheiten (5), die über dem Förderer (3) angeordnet sind, die in einer Richtung senkrecht zur Bewegungsrichtung (4) beabstandet sind, zum Umdrehen von Teigprodukten (2), die in mehreren Bahnen (C, D, E, F, G) auf dem Förderer (3) angeordnet sind.

9. Vorrichtung (1) nach einem der vorangehenden Ansprüche, wobei die Steuerung konfiguriert ist, die Bewegungsgeschwindigkeit der Teigprodukterfassungsfläche (6) in Bezug auf die Geschwindigkeit des Förderers (3) so einzustellen, dass bei einer gegebenen Länge, über die die Teigprodukterfassungsfläche (6) das Produkt (2) erfasst, und bei einem gegebenen Radius des Produkts (2) das Produkt eine halbe Drehung oder zumindest mehr als ein Viertel einer Drehung gedreht wird.

## Revendications

1. Dispositif (1) pour retourner des produits en pâte courbés en forme de U (2), en particulier des croissants, comprenant deux branches (21) reliées par une partie centrale (22), le dispositif comprenant:
- un transporteur (3), pour transporter les produits en pâte dans une direction de transport (4), dans lequel les branches de la forme de U soit précèdent (2B) soit suivent (2A) leur partie centrale;
- une unité de retournement (5) qui est agencée au-dessus du transporteur (3) et qui comprend:
∘ une surface d'engagement de produits en pâte (6) pour engager la partie centrale;
∘ un dispositif d'entraînement (7) pour déplacer la surface d'engagement de produits en pâte (6) dans la direction de transport (4);
∘ un dispositif de commande pour commander la vitesse de déplacement de la surface d'engagement de produits en pâte (6) par rapport à la vitesse du transporteur (3);
l'unité de retournement (5) présente un espace libre (8) pour les branches (21) du produit en pâte (2), sur les deux côtés de l'unité de retournement (5) dans une direction perpendiculaire à la direction de transport (4), afin de permettre aux branches (21) du produit en pâte (2) d'effectuer un tour lorsque le produit en pâte (2) est retourné,
**caractérisé en ce que** la surface d'engagement de produits en pâte (6) est configurée de manière à engager la partie centrale (22) sans toucher les branches (21) du produit en pâte (2).

2. Dispositif (1) selon la revendication 1, dans lequel la surface d'engagement de produits en pâte (6) dans le sens de la largeur perpendiculaire à la direction de transport (4) est inférieure 2 centimètres, de préférence inférieure à un centimètre, et en particulier inférieure à environ un demi-centimètre.

3. Dispositif (1) selon la revendication 2, dans lequel la surface d'engagement de produits en pâte (6) comprend une courroie pour engager la partie centrale (22).

4. Dispositif (1) selon la revendication 2, dans lequel la surface d'engagement de produits en pâte (6) comprend une pluralité de courroies pour engager la partie centrale (22).

5. Dispositif (1) selon les revendications 3 ou 4, dans lequel au moins une courroie est une courroie sans fin, étirée sur au moins deux poulies (10).

6. Dispositif (1) selon la revendication 5, dans lequel l'espace libre (8) présente une hauteur d'au moins 8 cm, et de préférence d'au moins 10 cm.

7. Dispositif (1) selon l'une quelconque des revendications précédentes, dans lequel le dispositif de commande est configuré de manière à régler la vitesse de la surface d'engagement de produits en pâte (6) plus élevée dans la direction que la vitesse du transporteur (3), lorsque le produit en pâte (2) doit être retourné à partir d'une position dans laquelle ses branches (21) suivent sa partie centrale (22) jusqu'à une position dans laquelle ses branches (21) précèdent sa partie centrale (22), et pour régler la vitesse de la surface d'engagement de produits en pâte (6) inférieure ou inverse dans la direction que la vitesse du transporteur (3), lorsque le produit en pâte (2) doit être retourné à partir d'une position dans laquelle ses branches (21) précèdent sa partie centrale (22) jusqu'à une position dans laquelle ses branches (21) suivent sa partie centrale (22).

8. Dispositif (1) selon l'une quelconque des revendications précédentes, comprenant de multiples unités de retournement (5) qui sont agencées au-dessus du transporteur (3) et espacées dans une direction perpendiculaire à la direction de déplacement (4), pour retourner des produits en pâte (2) agencés en de multiples lignes (C, D, E, F, G) sur le transporteur (3).

9. Dispositif (1) selon l'une quelconque des revendications précédentes, dans lequel le dispositif de commande est configuré de manière à régler la vitesse du déplacement de la surface d'engagement de produits en pâte (6) par rapport à la vitesse du transporteur (3) de telle sorte que, avec une longueur donnée sur laquelle la surface d'engagement de produits en pâte (6) engage le produit (2), et un rayon donné du produit (2), ledit produit est tourné d'un demi-tour, ou d'au moins de plus que d'un quart de tour.
